# EUROPEAN PATENT SPECIFICATION

(11) **EP 2 303 484 B1**
(45) Date of publication and mention of the grant of the patent: **03.01.2018**
(21) Application number: 09759336.2
(22) Date of filing: 03.06.2009
(51) Int. Cl.: B60N 2/68, B60N 2/28

(54) **SEAT FRAME - TAILORED TUBES**
SITZRAHMEN - MASSGESCHNEIDERTE ROHRE
ARMATURE DE SIÈGE - TUBES SUR MESURE

(30) Priority: 03.06.2008 US 58479 P
(43) Date of publication of application: 06.04.2011
(73) Proprietor: Johnson Controls Technology Company, Milwaukee, WI 53209 (US)
(72) Inventor: KMEID, Antoine, A., Canton MI 48187 (US); ZEKAVICA, Ornela, Novi MI 48375 (US); SAKKINEN, Daniel, James, Highland MI 48357 (US); THOMAS, Michael, John, Ann Arbor MI 48103 (US); SAVESKI, Alexander, South Lyon MA 48178 (US); LAFRAMBOISE, Gregg, Ronald, Windsor Ontario N8W5S4 (CA); DAGCIOGLU, Muhur, Omer, Llanwenog SA40 9UT (GB)
(74) Representative: Liedtke, Markus
(86) International application number: PCT/US2009/046121
(87) International publication number: WO 2009/149177

(56) References cited:
- DE-A1-102006 033 513
- US-A- 5 749 135
- THE AUTO/STEEL PARTNERSHIP (TAILOR WLEDED BLANK PROJECT TEAM): "Tailor welded blank applications and manufacturing - A State-of-the Art Survey", 20010601 , 1 June 2001 (2001-06-01), pages 1-91, XP008140880, Retrieved from the Internet: URL:http://www.a-sp.org/database/custom/tw b/TWBApp.pdf [retrieved on 2009-07-15]
- 'The Auto/Steel Partnership; Tailor Welded Blank Project Team' TAILOR WELDED BLANK APPLICATIONS AND MANUFACTURING, [Online] June 2001, XP008140880 Retrieved from the Internet: <URL:http://www.a-sp.org/database/custom/tw b/TWBApp.pdf> [retrieved on 2009-07-15]

## Description

### BACKGROUND

The present disclosure relates generally to the field of vehicle seating. More specifically, this disclosure relates to the use of tailored tubes for forming light weight vehicle seat components.

Current closed section seat components, such as seat back frames, low seat structures, seat cushion frames, integrated structural seat (ISS) towers, seat base or cushion torsion tubes, and the like, are predominantly made of steel having a single thickness and strength, a generally uniform outside diameter, a uniform section along its length, and a generally uniform steel material grade. These closed section seat components are primarily designed to support pressure generated from occupant weight during normal usage and manage loads generated during vehicle collisions. Vehicle seat structures are generally optimized by selecting the material thickness and the material grade and the designing components with structurally advantaged shapes. Nevertheless, these current vehicle seat components add substantial mass to seat structures and impede fuel economy improvements and increase costs, among other effects. US 5,749,135 discloses a method for extruding integral seat back frame of a constant cross section aluminum blank. Further, it is known from the document "Tailor welded blank applications and manufacturing", The Auto/Steel Partnership (Tailor Welded Blank Project Team), 2000 Town Center - Suite 320, Southfield, MI 48075-1123, June 2001, that tailor welded blanks are used with door inners and one-piece body side.

DE 10 2006 033513 A1 (corresponding to the preamble of claim 1) discloses a backrest structure comprising a first frame part and a second frame part each having angled sides facing each other. The frame parts are connected together on the outer sides forming a peripheral frame. The outer sides of each frame part have different lengths.

There remains a desire to improve vehicle fuel economy and decrease manufacturing costs by providing lower mass components in the seat and thus the vehicle.

### SUMMARY

The invention is defined by the technical features set forth in claim 1, with additional features thereof disclosed in the dependent claims. An exemplary embodiment of the present disclosure relates to a frame for use in a vehicle seat assembly comprising a first tubular member having a plurality of segments coupled together wherein each segment has a plurality of properties. The properties of each segment of the plurality of segments are selected from the group consisting of: thickness, length, shape, material type, material grade, outer diameter, and inside diameter. The value for one property for a first segment is different than the value of the one property for a second segment.

The present disclosure also relates to a tubular vehicle seat frame for use in a vehicle seat back assembly. The tubular vehicle seat frame comprises a first tubular member having a plurality of segments coupled together wherein each segment has a plurality of properties and wherein the value for one property for a first segment is different than the value of the one property for a second segment. The first segment and the second segment are laser welded together. The first tubular member has a first end portion having a varying diameter which changes along its length and a distal end that has not been rolled into a closed tubular section for coupling to tubular vehicle seat frame to one of the vehicle seat and the vehicle.

### BRIEF DESCRIPTION OF THE DRAWINGS

FIG. 1 is a perspective view of a vehicle with seats including tailored tube components according to an exemplary embodiment.
FIG. 2 is a perspective view of a vehicle seat including tailored tube components according to an exemplary embodiment.
FIG. 3A is a diagram of a tube tailoring process using orbital welding according to an exemplary embodiment.
FIG. 3B is a diagram of a tube tailoring process using tailor coil or blank welding according to an exemplary embodiment.
FIG. 4 is a perspective view of a conventional tubular closed section seat back frame having a back panel.
FIG. 5A is a perspective view of a tubular seat back frame having various sectional properties with a constant outside diameter according to one exemplary embodiment showing part of the features according to the invention.
FIG. 5B is a front cross sectional view of the tubular seat back frame in FIG. 5A having a constant outside diameter and six segments with variable thicknesses according to such an exemplary embodiment.
FIG. 5C is a front cross sectional view of the tubular seat back frame in FIG. 5A having a constant outside diameter and three segments with variable thicknesses according to such an exemplary embodiment.
FIG. 5D is a perspective view of a tubular seat back frame having various sectional properties with a variable outside diameter and/or variable thicknesses according to such an exemplary embodiment.
FIG. 5E is a front cross sectional view of the tubular seat back frame in FIG. 5D having various sectional properties with a variable outside diameter and/or variable thicknesses according to such an exemplary embodiment.
FIGS. 6A and 6B are a side and top view of a tailored blank for a tubular seat back frame with integrated mounting bracket having various sectional properties according to an exemplary embodiment showing part of the features of the invention.
FIG. 6C is a perspective view with cross sectional views taken along the E-E, F-F, and G-G lines in the perspective view of a tailored tube seat back frame having various sectional properties according to the only exemplary embodiment of the invention.
FIG. 7 is a perspective view of a vehicle seat base or cushion frame for a vehicle seat assembly formed from tailored tubes having various sectional properties according to an exemplary embodiment.
FIG. 8 is a perspective view of a seat base or cushion frame for a vehicle seat assembly having torsion tubes formed from tailored tubes having various sectional properties according to an exemplary embodiment.
FIG. 9A is a perspective view of a vehicle seat assembly having a cross-seat lower structural member formed from tailored tubes having various sectional properties according to an exemplary embodiment.
FIG. 9B is a front sectional view of the vehicle seat assembly in FIG. 9A having the lower seat structural member formed from tailored tubes having various sectional properties according to an exemplary embodiment.
FIGS. 10A-10F is a side view of several fasteners made from tailored tubes having various sectional properties according to an exemplary embodiment.

### DETAILED DESCRIPTION

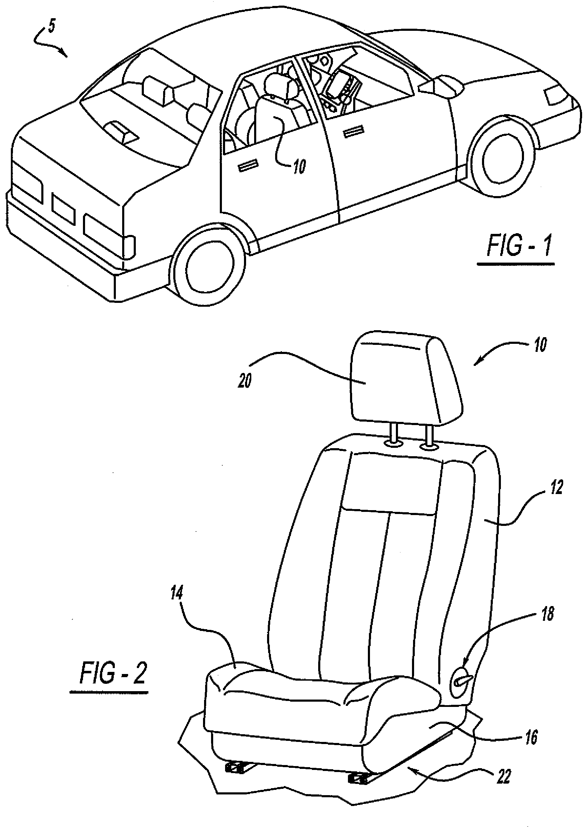

Referring generally to the figures and in particular to FIG. 1, a vehicle 5 is shown according an exemplary embodiment. The vehicle 5 includes one or more vehicle seats 10 provided for an occupant of the vehicle 5. One exemplary embodiment of a vehicle seat structure 10 is shown in FIG. 2. While the vehicle 5 shown is a 4-door sedan, it should be understood that the seat 10 may be used in a mini-van, sport utility vehicle or any other means in or by which someone travels or something is carried or conveyed for any market or application including everything from office seating and transportation to planes and space travel and everything in between. The vehicle seat 10 shown includes a seat back 12, a seat cushion 14, a seat base 16, and a connection member or recliner 18 coupled to the seat back 12 and the seat base 16. The vehicle seat 10 further may include a head restraint 20 and base portion 22. The head restraint 20 extends upward from the seat back 12 and is configured to restrain the head of an occupant. The base portion (e.g. track assembly) 22 couples the seat 10 to the vehicle body and may be configured to allow the seat 10 to be selectively positioned (manually or motor driven) relative to the vehicle body.

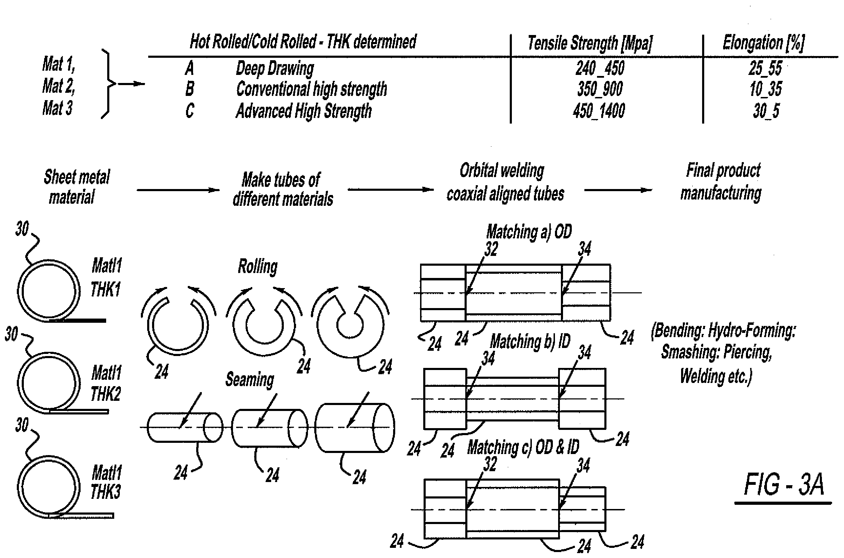

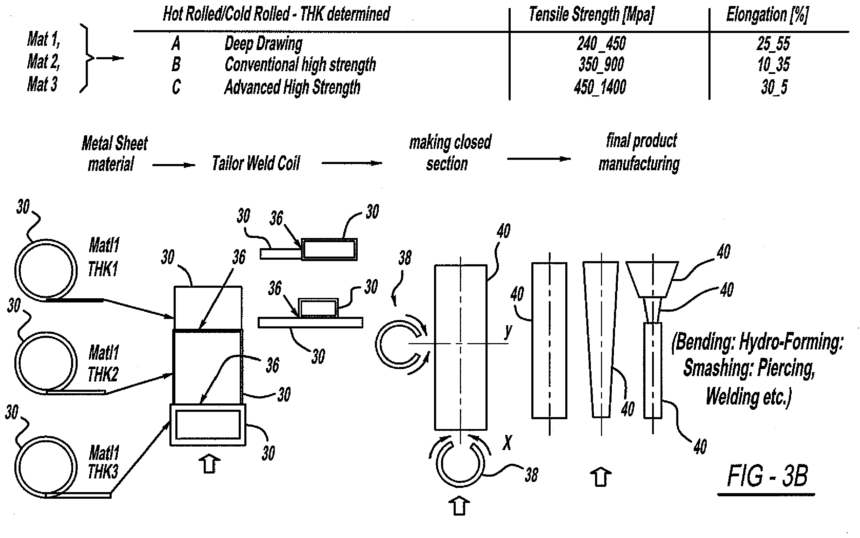

FIGS. 3A-3B show a diagram of a tube 24 tailoring process using orbital welding and a diagram of a tube tailoring process using tailor welded coils (TWC) 26 or tailored welded blanks (TWB) 28, respectively. Tube 24 tailoring via orbital welding and tailor coil welding (with different options in making closed sections) enables the incorporation of different material and/or thickness and/or shape along the length of the tube 24 as dictated by particular requirements. The tailored tubes 24 are subsequently processed with different secondary procedures to form the final product. As shown in FIG. 3A, after selecting a particular sheet metal material 30 having a particular thickness, the sheet metal material 30 is formed into a tube 24 by either a rolling or seaming technique. The tubes 24 may then be coaxially aligned such that the tubes 24 have a matching outer diameter (OD) 32, or a matching inner diameter (ID) 34, or a matching OD 32 and ID 34. Once the tubes 24 are coaxially aligned between each other, the tubes 24 are coupled together (e.g., via orbital laser welding). During final product manufacturing, the tailored tubes 24 may further be formed into desired components through various techniques including, but not limited to, bending, hydroforming, smashing, crushing, piercing, welding, and the like. Similarly, as shown in FIG. 3B, after selecting a particular sheet metal material 30 having a particular thickness, the sheet metal material 30 is formed into a TWB 28. Connections between metal sheets 30 may be made along the edges 36 of the metal sheets 30 and/or by stacking metal sheets 30 over one another. Closed sections 38 may then be formed from the metal sheet material 30 along its x-axis or y-axis. The outer parameter 40 along the closed section 38 may be shaped to be uniform, gradually changed (e.g., tapered, conical, etc.), or discontinuously changed. During final product manufacturing, the tailored tubes 24 may further be formed into desired components through various techniques including, but not limited to, bending, hydroforming, smashing, crushing, piercing, welding, and the like.

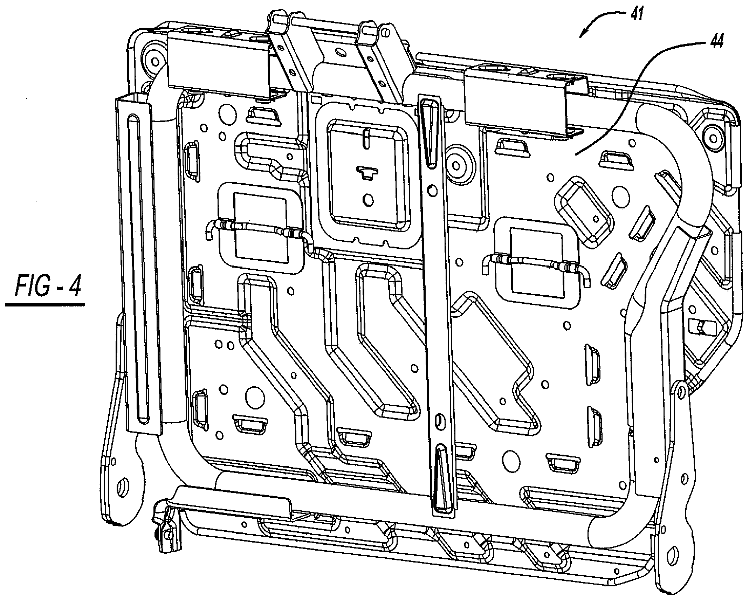

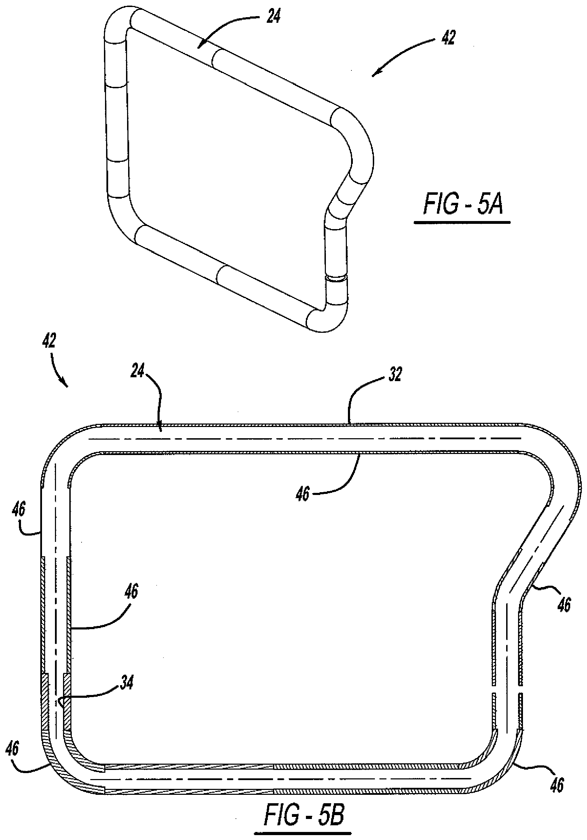

FIG. 4 shows a conventional tubular closed section seat back frame 41 having a back panel 44 and constructed using conventional manufacturing processes that produce a single material and thicknesses throughout the tubular closed section seat back frame 42. According to an exemplary embodiment, a tubular seat back frame 42 may be constructed of various tubes 24 that change material and thickness along the longitudinal axis of the tube 24 in order to optimally support the structural requirements for seat back frames 42, as shown in FIG. 5A-5E.

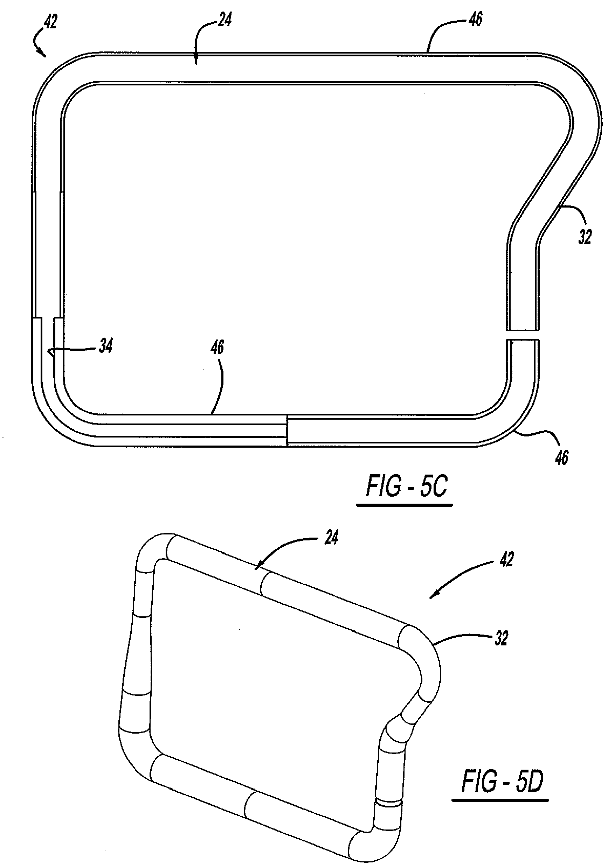

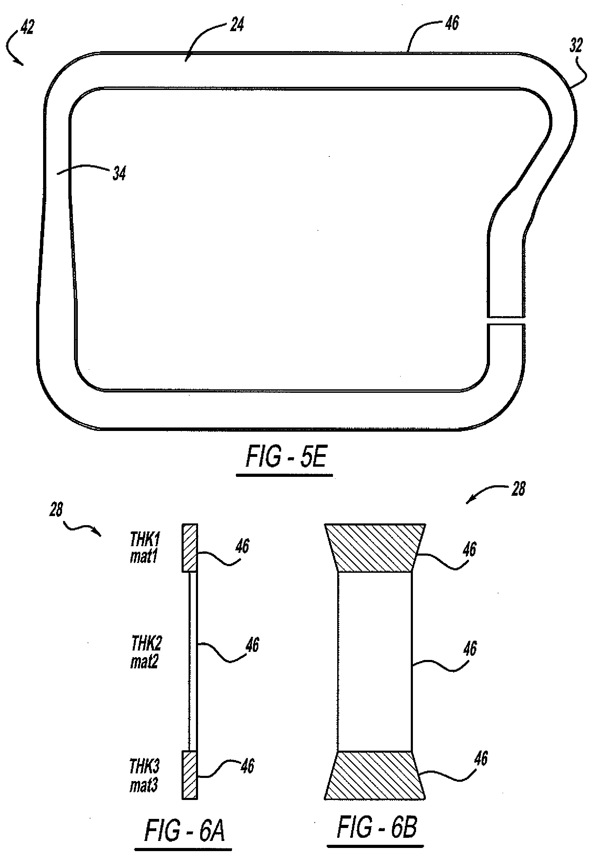

As shown in FIG. 5A-5E, tailored tubes 24 may be incorporated into seat back frames 42 and have various sectional properties to support the required sectional property within the frame 42 and manage packaging issues. For example, tailored tubes 24 in seat back frames 42 may have uniform outside diameters 32, but have variable thickness and/or material grade along length of the tailored tube 24, as best shown in FIG. 5A. As shown in FIG. 5B, a seat back frame 42 may also be formed from tailored tubes 24 having uniform or constant outer diameters (ODs) 32 and six segments 46 having variable thicknesses and/or material grades. As shown in FIG. 5C, a seat back frame 42 may also be formed from tailored tubes 24 having uniform or constant ODs 32 and three segments 46 having variable thicknesses and/or material grades. As shown in FIG. 5D and 5E, a seat back frame 42 may also be formed from tailored tubes 24 having variable ODs 32 and variable or constant thicknesses and/or materials. Incorporating such tailored tubes 24 into seat back frames 42 enables the optimization of sectional properties for the seat back frame 42 and represents one option of potential feature integration. Other considerations that may be taken into account by using tailored tubes 24 include: the formation of a closed section 38 via shape and dimension support strength and stiffness requirements; and formation of a flat area for recliner/latch attachment plates, etc. By incorporating tailored tubes 24 into seat back frames 42, numerous benefits may be realized including mass reduction, optimized sectional properties, incorporation of seating features, incorporation of assembly surfaces, and optimized packaging space, among other benefits.

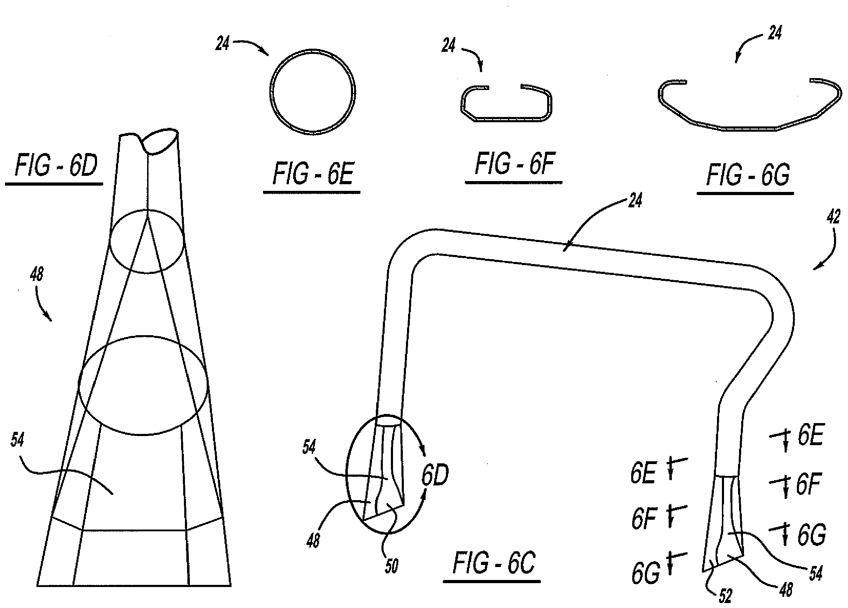

Referring to FIGS. 6A-6E, a tailored blank 28 for a tubular seat back frame 42 with integrated mounting brackets 48 having various sectional properties is shown. For example, the tailored blank 28 and tailored back frame tube 42 with integrated mounting brackets 48 may be formed from variable materials and/or thicknesses and/or segment 46 lengths, and/or material grades to optimize structural requirements (e.g., strength requirements, etc.) of the seat back frame 42, as best shown in FIG. 6A. Moreover, the OD 32 of the tailored blank 28 and tailored back frame tube 42 may change gradually along its length or have a step change. Furthermore, the seat back frame 42 may have a one-piece tubular construction and, according to the invention as illustrated in Figure 6C, have ends 50, 52 that have not been rolled into closed sections 38 leaving the ends of the tubes 50, 52 flat so attachment surfaces 54 for other, seat back mechanisms, and the like, may be formed or coupled thereon. As such, these types of tailored tubes 24 are very useful not only for the placement of required sections along a particular length of the tube 24, but also to resolve packaging issues.

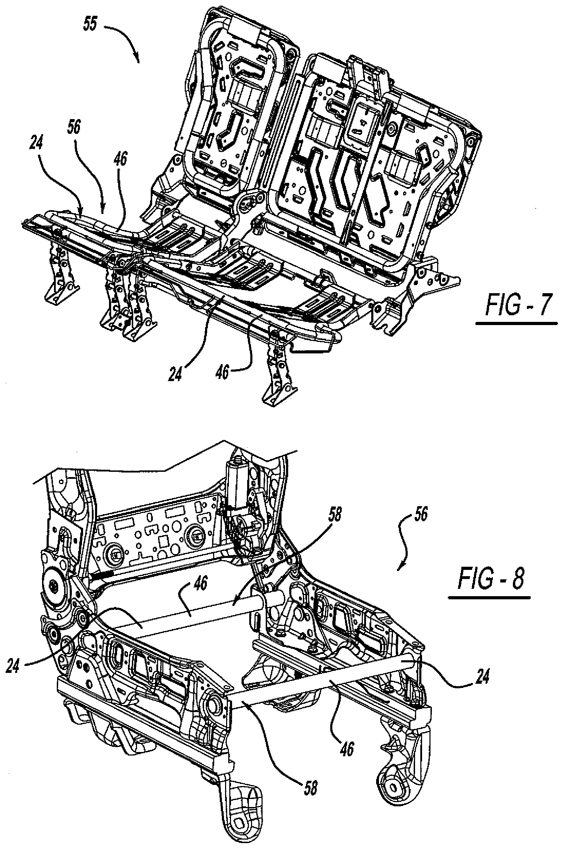

FIG. 7 shows a vehicle seat cushion frame 56 for a vehicle seat assembly 55 formed from tailored tubes 24 having various sectional properties. For example, the tailored tubes 24 in seat cushion frames 56 may be formed from variable materials and/or thicknesses and/or segment 46 lengths, and/or material grades to optimize structural requirements (e.g., strength requirements, etc.) of the seat cushion frame 56. In contrast, conventional tubular seat cushion frames are fabricated using conventional technologies that do not allow flexibility in placing different sectional properties and combining features along the seat frame parameter. Analysis of sectional properties to support requirements for the cushion frames, however, suggest that incorporating tailored tubes 24 with variable sectional properties and potentially shapes along the longitudinal axis of the tube 24, as shown in FIG. 7, enable mass reduction. Moreover, additional mass savings may be realized if various features may be combined (e.g., flat attachment surfaces 54 incorporated onto tailored tubes 24 with variable thickness, materials, etc.).

FIG. 8 shows a seat cushion frame 56 for a vehicle seat assembly 10 having torsion tubes 58 formed from tailored tubes 24 having various sectional properties. For example, the torsion tubes 58 formed from tailored tubes 24 may be formed from variable materials and/or thicknesses and/or segment 46 lengths, and/or material grades to optimize structural requirements (e.g., strength requirements, etc.) of the torsion tubes 58 and seat cushion frame 56. Incorporating such tailored tubes 24 into seat cushion frames 56 enables the optimization of sectional properties for the seat cushion frame 56 and represents one option of potential feature integration. Other considerations that may be taken into account by using tailored tubes 24 in seat cushion frames 56 include: the formation of a closed section 38 via shape and dimension support strength and stiffness requirements; and formation of a flat area 54 for cushion attachment.

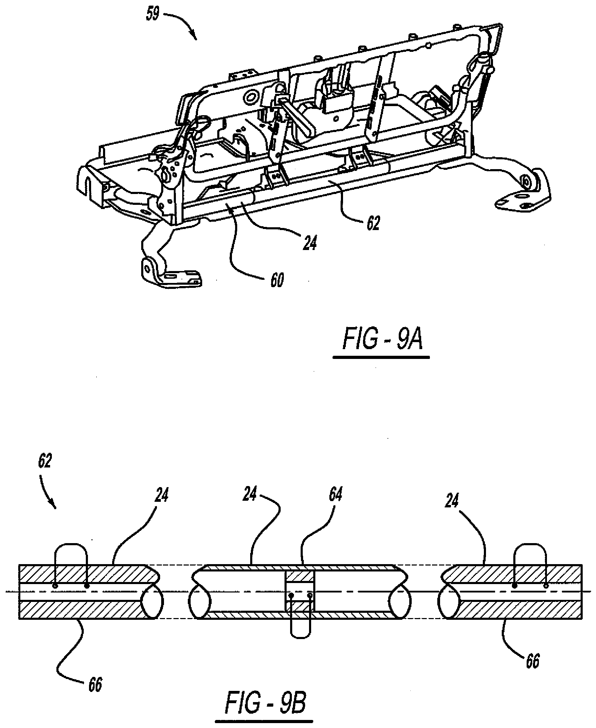

Referring now to FIGS. 9A-9B, a vehicle seat assembly 59 having a lower seat structural member 60 formed from tailored tubes 24 having various sectional properties is shown. The structural member 60 is a load managing seat component that enables the connection between the seat back 12 and seat cushion structure 16 and also provides attachment to the floor of a vehicle 5. The structural member 60 includes a tube or closed section 62 that couples the following: child seat lower anchors, upper tethers, recliners and back locks, buckle attachments, and fore/aft mechanism attachments. Due to function, the low structure tube 62 experiences relatively very high torsion and bending forces. At times, the type and severity of loads change rapidly along the length of the tube 62. Existing low structural member tubes are formed using current technologies that result in lower structure tube designs that are relatively extremely massive to address the limitations and functional and structural demands. Forming a low structure tube 62 with tailored tubes 24, as best shown in FIG. 9B, allows for the consideration of optimal sectional properties and represents one option of potential coupling and/or integration of seat features, such as an upper tether area 64 and recliner or latch and child seat anchor areas 66. By incorporating tailored tubes 24 into seat low structures 60, numerous benefits may be realized including mass reduction, optimized sectional properties, incorporation of seating features, incorporation of assembly surfaces, and optimized packaging space, among other benefits.

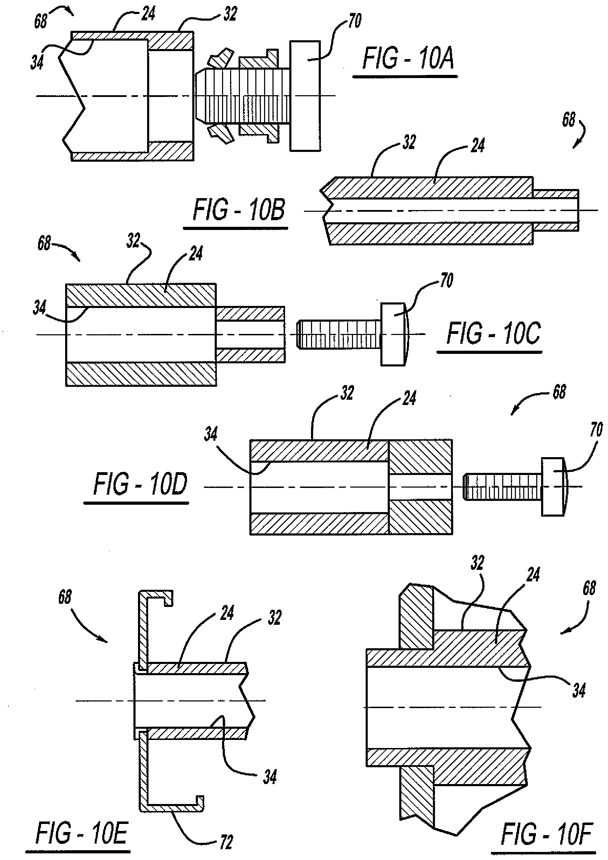

FIGS. 10A-10F show fasteners 68 made from tailored tubes 24 having various sectional properties according to an exemplary embodiment. The tailored tubes 24 may have a matched outer diameter (OD) 32, a matched inner diameter (ID) 34, or a matched OD 32 and ID 34. Having a matched OD 32 or a matched OD 32 and ID 34 provides enough material so that a self tapping screw 70 may be inserted at the end of the thin wall tube 24. Having a matched ID 34 provides enough material for attaching (e.g., attaching to other structures/components, attaching brackets 72, etc.) at the end of the tube 24.

While the above descriptions have generally dealt with tailor welded steel components, it should be understood that the metal used to form the seat frame and other components is not limited to steel. According to other exemplary embodiments, the seat frame and other components may be formed from aluminum, or any other suitable metal or alloy which will trigger other ways for making seams between tubes and sheet metal components.

For purposes of this disclosure, the term "coupled" means the joining of two components (electrical or mechanical) directly or indirectly to one another. Such joining may be stationary in nature or movable in nature. Such joining may be achieved with the two components (electrical or mechanical) and any additional intermediate members being integrally formed as a single unitary body with one another or with the two components or the two components and any additional member being attached to one another. Such joining may be permanent in nature or alternatively may be removable or releasable in nature.

It is also important to note that the construction and arrangement of the elements of the vehicle seat as shown in the preferred and other exemplary embodiments is illustrative only. Although only a single embodiment of the present invention has been described in detail in this disclosure, those skilled in the art who review this disclosure will readily appreciate that many modifications are possible (e.g., variations in sizes, dimensions, structures, shapes and proportions of the various elements, values of parameters, mounting arrangements, use of materials, colors, orientations, etc.) if not materially departing from the scope of the invention as defined in the appended claims. It should be noted that the elements and/or assemblies of the system may be constructed from any of a wide variety of materials that provide sufficient strength or durability, in any of a wide variety of colors, textures and combinations. Accordingly, all such modifications are intended to be included within the scope of the present invention.

## Claims

1. Tubular vehicle seat frame (42) for a vehicle seat back assembly, the tubular vehicle seat frame (42) comprising:
a first tubular member (24) having a plurality of segments (46) coupled together wherein each segment (46) has a plurality of properties and wherein the value for one property for a first segment is different than the value of the one property for a second segment; wherein the first segment and the second segment are laser welded together;
**characterized in that** the first tubular member (24) has
- a first end portion having a varying diameter which changes along its length by segments (46) coupled in succession, and
- a distal end that has not been rolled into a closed tubular section for coupling the tubular vehicle seat frame (42) to one of the vehicle seat (10) and the vehicle.

2. Tubular vehicle seat frame (42) according to claim 1, **characterized in that** the first segment has a different length than the length of the second segment.

3. Tubular vehicle seat frame (42) according to claim 1 or 2, **characterized in that** the first segment is made from a different material than the second segment.

4. Tubular vehicle seat frame (42) according to one of claims 1 to 3, **characterized in that** the first segment has a different material grade than the second segment.

5. Tubular vehicle seat frame (42) according to one of the previous claims, **characterized in that** the first segment has a different outer diameter than the second segment.

6. Tubular vehicle seat frame (42) according to one of the previous claims, **characterized in that** the first segment has a different inner diameter than the second segment.

7. Tubular vehicle seat frame (42) according to one of the previous claims, **characterized in that** the first segment and the second segment are coaxially aligned.

## Patentansprüche

1. Rohrförmiger Fahrzeugsitzrahmen (42) für eine Fahrzeugsitzrückenlehnenanordnung, wobei der rohrförmige Fahrzeugsitzrahmen (42) umfasst:
ein erstes rohrförmiges Element (24) mit einer Vielzahl von Segmenten (46), die miteinander verbunden sind, wobei jedes Segment (46) eine Vielzahl von Eigenschaften aufweist und wobei der Wert für eine Eigenschaft für ein erstes Segment zum Wert der einen Eigenschaft für ein zweites Segment verschieden ist; wobei das erste Segment und das zweite Segment mit Laser zusammengeschweißt werden;
**dadurch gekennzeichnet, dass** das erste rohrförmige Element (24) aufweist
- einen ersten Endabschnitt mit einem variierenden Durchmesser, der sich entlang seiner Länge durch nacheinander gekoppelte Segmente (46) ändert, und
- ein fernes Ende, das nicht in einen geschlossenen rohrförmigen Abschnitt gerollt wurde, um den rohrförmigen Fahrzeugsitzrahmen (42) mit entweder dem Fahrzeugsitz (10) oder dem Fahrzeug zu verbinden.

2. Rohrförmiger Fahrzeugsitzrahmen (42) nach Anspruch 1, **dadurch gekennzeichnet, dass** das erste Segment eine andere Länge aufweist, als es die Länge des zweiten Segments ist.

3. Rohrförmiger Fahrzeugsitzrahmen (42) nach Anspruch 1 oder 2, **dadurch gekennzeichnet, dass** das erste Segment aus einem anderen Material als das zweite Segment hergestellt ist.

4. Rohrförmiger Fahrzeugsitzrahmen (42) nach einem der Ansprüche 1 bis 3, **dadurch gekennzeichnet, dass** das erste Segment eine andere Materialgüte als das zweite Segment aufweist.

5. Rohrförmiger Fahrzeugsitzrahmen (42) nach einem der vorhergehenden Ansprüche, **dadurch gekennzeichnet, dass** das erste Segment einen anderen Außendurchmesser als das zweite Segment aufweist.

6. Rohrförmiger Fahrzeugsitzrahmen (42) nach einem der vorhergehenden Ansprüche, **dadurch gekennzeichnet, dass** das erste Segment einen anderen inneren Durchmesser als das zweite Segment aufweist.

7. Rohrförmiger Fahrzeugsitzrahmen (42) nach einem der vorhergehenden Ansprüche, **dadurch gekennzeichnet, dass** das erste Segment und das zweite Segment koaxial ausgerichtet sind.

## Revendications

1. Cadre tubulaire de siège de véhicule (42) pour un ensemble de dossier de siège de véhicule, le cadre tubulaire de siège de véhicule (42) comprenant :
un premier organe tubulaire (24) ayant une pluralité de segments (46) accouplé ensemble, chaque segment (46) ayant une pluralité de propriétés et la valeur d'une propriété pour un premier segment étant différente de la valeur de la même propriété pour un second segment ; le premier segment et le second segment étant soudés au laser l'un à l'autre ;
**caractérisé en ce que** le premier organe tubulaire (24) présente :
- une première partie d'extrémité ayant un diamètre variable qui change le long de sa longueur par des segments (46) accouplés en succession, et
- une extrémité distale qui n'a pas été roulée en une section tubulaire fermée pour accoupler le cadre tubulaire de siège de véhicule (42) à l'un du siège de véhicule (10) et du véhicule.

2. Cadre tubulaire de siège de véhicule (42) selon la revendication 1, **caractérisé en ce que** le premier segment a une longueur différente de la longueur du second segment.

3. Cadre tubulaire de siège de véhicule (42) selon la revendication 1 ou 2, **caractérisé en ce que** le premier segment est fabriqué en un matériau différent de celui du second segment.

4. Cadre tubulaire de siège de véhicule (42) selon l'une quelconque des revendications 1 à 3, **caractérisé en ce que** le premier segment a une qualité de matériau différente de celle du second segment.

5. Cadre tubulaire de siège de véhicule (42) selon l'une quelconque des revendications précédentes, **caractérisé en ce que** le premier segment a un diamètre extérieur différent de celui du second segment.

6. Cadre tubulaire de siège de véhicule (42) selon l'une quelconque des revendications précédentes, **caractérisé en ce que** le premier segment a un diamètre intérieur différent de celui du second segment.

7. Cadre tubulaire de siège de véhicule (42) selon l'une quelconque des revendications précédentes, **caractérisé en ce que** le premier segment et le second segment sont alignés coaxialement.
